# EUROPEAN PATENT APPLICATION

(11) **EP 4 789 931 A1**
(43) Date of publication of application: **12.08.2026**
(21) Application number: 26156790.3
(22) Date of filing: 06.02.2026
(51) Int. Cl.: B60T 8/32, B60T 8/172

(54) **METHODS, APPARATUSES, CONTROLLERS, AND PRODUCTS FOR CONTROLLING VEHICLE BRAKING**

(30) Priority: 11.02.2025 CN 202510154595
(71) Applicant: Robert Bosch GmbH, 70442 Stuttgart (DE)
(72) Inventor: LI, Yuxiao, Shanghai, 200335 (CN); LU, Xiaonan, Shanghai, 200335 (CN); LI, Longyuan, Shanghai, 200335 (CN)

(57) **Abstract**

The present disclosure relates to methods, apparatuses, controllers, and products for controlling vehicle braking. The method comprises acquiring a comfort braking level for the vehicle determined based on multimodal data related to the vehicle. This multimodal data comprises vehicle state data and environmental sensing data. Further, the method further comprises controlling the braking of the vehicle according to the comfort braking level. In this way, the vehicle's comfort braking can be controlled in conjunction with the external environmental conditions, thereby improving the comfort of vehicle braking and enhancing the user experience.

## Description

### Technical Field

The present disclosure relates to the field of smart driving, and more particularly, to methods, apparatuses, controllers, and products for controlling vehicle braking.

### Background

The braking system of a vehicle, typically in response to the driver pressing the brake pedal, transmits power to the wheel brakes via a hydraulic or pneumatic transmission mechanism. The friction between non-rotating and rotating elements (e.g., calipers and brake discs) prevents the wheels from rotating or tending to rotate, thereby slowing down or stopping the vehicle. During braking, as the driver gradually depresses the brake pedal, the braking force gradually increases, causing the deceleration (hereinafter referred to as acceleration, which should be understood as a negative value) to also gradually increase.

**In** some vehicles equipped with advanced braking systems, such as vehicles with antilock braking systems (ABS) or electronic stability programs (ESPs), the initial acceleration when braking may increase as the braking force increases, but when the system detects that the wheels are locking or the vehicle is losing control, the braking force is automatically adjusted to slightly reduce the acceleration and keep it within the appropriate range to avoid wheel lock-up and loss of vehicle control.

### Summary of the Invention

**In** a first aspect of the examples of the present disclosure, a method for controlling vehicle braking is provided. The method further comprises acquiring a comfort braking level for the vehicle determined based on multimodal data related to the vehicle. This multimodal data comprises vehicle state data and environmental sensing data. Further, the method further comprises controlling the braking of the vehicle according to the comfort braking level.

In a second aspect of the examples of the present disclosure, an apparatus for controlling vehicle braking is provided. The apparatus further comprises a braking level acquisition unit configured to acquire a comfort braking level for the vehicle determined based on multimodal data related to the vehicle. This multimodal data comprises vehicle state data and environmental sensing data. Further, the apparatus further comprises a brake control unit configured to control the braking of the vehicle according to the comfort braking level.

In a third aspect of the examples of the present disclosure, a controller is provided. The controller comprises at least one processor; and a memory coupled to the at least one processor and having instructions stored thereon that, when executed by the at least one processor, cause the controller to perform the method provided according to the first aspect of the present disclosure.

In a fourth aspect of the examples of the present disclosure, a computer program product comprises a computer program, which is executed by a processor to implement the method provided according to the first aspect.

In a fifth aspect of the examples of the present disclosure, a computer-readable storage medium is provided. The computer-readable storage medium has computer-executable instructions stored thereon, wherein the computer-executable instructions are executed by a processor to implement the method provided according to the first aspect of the present disclosure.

In a sixth aspect of the examples of the present disclosure, a vehicle is provided. The vehicle comprises a controller provided by the third aspect of the present disclosure.

It will be understood that the content described in the Summary of the Invention is not intended to limit key or important features of the examples of the present disclosure, nor is it intended to limit the scope of the present disclosure. Other features of the present disclosure will become readily understood by the following description.

### Brief Description of the Drawings

The above and other features, advantages, and aspects of various examples of the present disclosure will become more apparent in combination with the accompanying drawings and with reference to the following detailed description. In the accompanying drawings, like or similar accompanying drawings designate like or similar elements, wherein:
FIG. 1 shows a schematic diagram of an example environment in which some examples of the present disclosure may be implemented;
FIG. 2 shows a flow chart of a method for controlling vehicle braking according to some examples of the present disclosure;
FIG. 3 shows a schematic diagram of a process for determining a comfort braking level according to some examples of the present disclosure;
FIG. 4 shows a schematic diagram of a method for determining vehicle weight according to some examples of the present disclosure;
FIG. 5 shows a schematic diagram of a method for determining inclination according to some examples of the present disclosure;
FIG. 6 shows a schematic diagram of a method for determining the height of an obstacle according to some examples of the present disclosure;
FIG. 7 shows a schematic diagram of a process for determining whether to activate comfort braking according to some examples of the present disclosure;
FIG. 8A shows a schematic diagram of the stages of a process for comfort braking according to some examples of the present disclosure;
FIG. 8B shows a schematic diagram of different comfort braking levels according to some examples of the present disclosure;
FIG. 9 shows a schematic diagram of a training method for a vehicle weight model according to some examples of the present disclosure;
FIG. 10 shows a schematic diagram of a training method for an inclination model according to some examples of the present disclosure;
FIG. 11 shows a schematic diagram of a training method for an obstacle height model according to some examples of the present disclosure;
FIG. 12 shows a schematic diagram of a training method for a brake disc temperature model according to some examples of the present disclosure;
FIG. 13 shows a schematic block diagram of an apparatus for braking a vehicle according to some examples of the present disclosure; and
FIG. 14 shows a schematic block diagram of a controller according to some examples of the present disclosure.

In all figures, like or similar reference signs represent like or similar elements.

### Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It will be understood that the accompanying drawings and examples of the present disclosure are for exemplary purposes only and are not intended to limit the scope of protection of the present disclosure, and the examples of the present disclosure that are described below with reference to the accompanying drawings are for illustrative purposes only.

Changes in acceleration during vehicle braking can cause passengers to experience a jerking sensation, reducing user comfort. Some braking systems address braking comfort issues from a physical or mechanical perspective, such as adjusting the vehicle body structure or braking force to improve braking comfort. However, these methods, which aim to improve comfort by suppressing acceleration and extending braking distance, may cause comfort and safety issues in scenarios where shorter braking distances are required (e.g., going downhill, in rainy or snowy weather, or on slippery roads). Further, these methods fail to account for the effects of external conditions on braking control.

Comfort braking or Comfort Stop (CTS) refers to reducing the peak value of acceleration pitch (i.e., the maximum value of acceleration change) for a short period of time (e.g., 2 seconds) before braking ends, thereby achieving a comfortable experience before stopping. As noted above, in order to improve comfort, related techniques usually only suppress acceleration based on the internal parameters of the vehicle's braking system, which may cause discomfort in some scenarios. That is, the braking system considers only the internal sensors of the braking system and uses the deceleration curve constructed by the model without taking into account the actual conditions outside the vehicle, resulting in poor control of braking comfort and worsening the user experience.

To this end, examples of the present disclosure provide a method for controlling vehicle braking.. In examples of the present disclosure, a comfort braking level for the vehicle determined based on multimodal data related to the vehicle is acquired. This multimodal data comprises not only vehicle state data but also environmental sensing data. Further, vehicle braking is controlled based on the determined comfort braking level. In some examples, this multimodal data may be provided by the advanced driver assistance system (ADAS) of the vehicle. Of course, it may also be provided by other systems of the vehicle.

In this way, the comfort braking level is determined based on multimodal data that integrates vehicle state data and environmental sensing data in order to control vehicle braking. This allows the vehicle to sense more of the actual circumstances of the external environment while considering the various parameters of the vehicle and control vehicle braking in consideration of the external environment, thereby further improving braking comfort and enhancing the user experience.

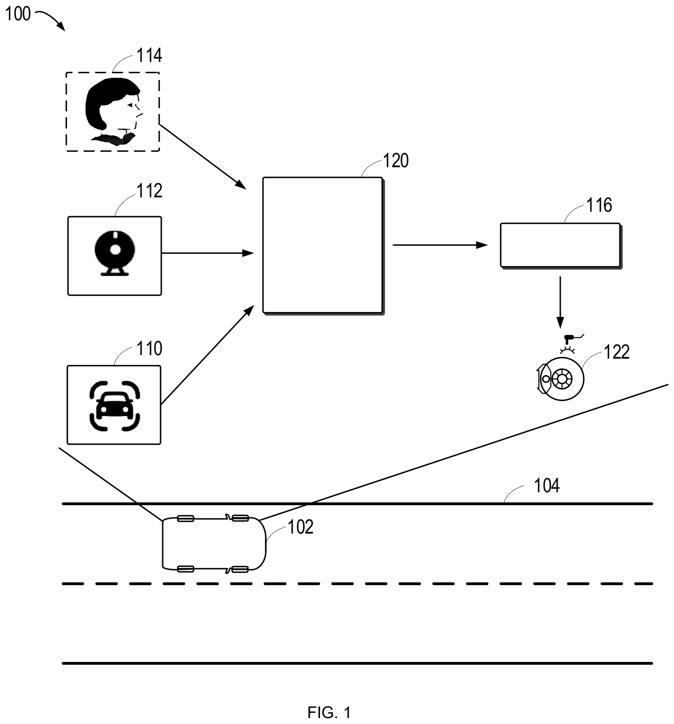

FIG. 1 shows a schematic diagram of an exemplary environment 100 in which a plurality of examples of the present disclosure may be implemented. As shown in FIG. 1, while the vehicle 102 is traveling on the road 104, comfort braking control can be performed to improve the user's comfort during vehicle braking. It will be understood that the users of the vehicle 102 may comprise the driver and passengers. For example, in some examples, the vehicle will perform comfort braking control if one or more of the following conditions are met: the driver requests a braking pressure of 5-50 bar, the vehicle speed is less than or equal to 10 kph (kilometers per hour), the absolute value of the acceleration is greater than 1 m/s², the gradient (vehicle inclination) is within 15%, and there is no ABS/ESP intervention. In some examples, comfort braking control will continue for a fixed period of time (e.g., 2 seconds) to brake the vehicle. In some examples, comfort braking control can control the squeezing force and friction of the calipers on the brake discs by the acceleration of the vehicle 102, thereby controlling the braking force of the vehicle 102.

In some examples, comfort braking control comprises reducing the peak value of acceleration pitch (i.e., the maximum value of the rate of change of acceleration) during braking, so that the vehicle 102 tends to decelerate more evenly when braking, thereby reducing the user's sense of jerking during the braking of the vehicle 102.

In some examples, comfort braking control may comprise adjusting the rate of change of acceleration of the vehicle 102 at different stages during braking. For example, the user may expect a greater acceleration during the initial stage of braking to ensure that the vehicle can stop, while the user may expect a smaller acceleration during the later stage of braking to slowly stop the vehicle and prevent a sense of being bumped due to inertia. Correspondingly, comfort braking control can make the rate of change of acceleration increasingly larger in the initial stage of braking to satisfy the user's expected braking sensation and increasingly smaller in the initial stage of braking to make the vehicle 102 stop smoothly to satisfy the user's expected smoothness sensation.

In some examples, comfort braking control may comprise adjusting the magnitude of acceleration of the vehicle 102 at different stages during braking. For example, the curve of acceleration versus time may be approximated as a piecewise function, which is nearly stable in each stage. For example, comfort braking control can increase acceleration in the initial stage of braking to satisfy the user's expected braking sensation, while decreasing it in the initial stage of braking to satisfy the user's expected smoothness sensation.

In some examples, comfort braking control may comprise controlling the duration of the acceleration phase during braking. For example, the duration of the stages when the rate of change of acceleration increases and decreases may be controlled separately. Alternatively, the durations of the stages with larger and smaller accelerations may be controlled separately. The duration of the expected braking sensation stage and the expected smoothness sensation stage can be adjusted to further meet user needs and improve the user experience.

In some examples, comfort braking control may account for braking distance. For example, comfort braking may sometimes extend a vehicle's braking distance, such as when suppressing acceleration during pitch. However, the need for braking comfort and safety varies depending on the vehicle's external or internal conditions. In some cases where the braking distance is long, it may be desirable to slightly reduce the braking distance to ensure safety. For example, when there are vehicles ahead, on a downhill road, in rainy or snowy weather, or when the road surface is wet, the safe braking distance can be longer than when there are no vehicles ahead, on a flat road, in sunny weather, or when the road surface is dry. In these scenarios, a slight increase in acceleration is needed to ensure safety, but a smaller rate of acceleration change is still expected. For example, when the safe braking distance is long, comfort braking control can initially control the acceleration to be small so that the vehicle decelerates smoothly. It can then gradually increase the acceleration according to the deceleration situation so that the acceleration changes smoothly, avoiding wheel lock-up or loss of vehicle control due to sudden hard braking.

In some examples, comfort braking control may take into account the individual feelings of the user. Users of the vehicle 102 (e.g., drivers and/or passengers) may have different subjective feelings about comfort braking. For example, in the case of infant passengers, the vehicle needs to brake more slowly to reduce the discomfort caused by braking to the infant/child. The different states of the driver and/or passengers in the vehicle 102 also result in different requirements for safe braking distance. For example, when the driver is fatigued or angry, the braking response time is longer, requiring a longer safe braking distance and smoother control of the rate of change of acceleration.

In the environment 100, the vehicle 102 may comprise internal acquisition devices for collecting various forms of data of the vehicle 102 itself (hereinafter also referred to as vehicle state data 110). For example, the internal data acquisition devices may comprise various sensors installed on different components within the vehicle 102, such as speed sensors, acceleration sensors, steering angle sensors, brake pedal sensors, etc., in order to collect the physical parameters of different components of the vehicle 102. For example, the internal acquisition devices may comprise vehicle bus systems, such as a Controller Area Network bus (CAN bus), for acquiring data from various control units of the vehicle.

In the environment 100, the vehicle 102 comprises external acquisition devices for acquiring various forms of data outside the vehicle 102 (hereinafter also referred to as environmental sensing data 112). For example, the external acquisition devices may comprise cameras that can acquire images of the surrounding environment of the vehicle 102. The images acquired by the acquisition devices may comprise environmental sensing data 112 related to lanes, road signs, road conditions ahead, etc. In some examples, the external acquisition devices may further comprise various sensors installed on the vehicle body, such as radar, lidar, ultrasonic sensors, barometric pressure sensors, etc., for various parameters of the surrounding environment or objects in the environment of the vehicle 102.

In the environment 100, the vehicle 102 further comprises a controller 120. The controller 120 may be a vehicle control unit, a domain control unit, a control unit of any subsystem of vehicle 102, a processing unit of the vehicle system, and the like. In some examples, the controller 120 may acquire a vehicle comfort braking level 116 determined based on vehicle state data 110 and environmental sensing data 112 and control the braking of the vehicle 102 via the vehicle braking system 122 based on the comfort braking level 116. In some examples, the controller 120 may directly determine a comfort braking level 116 for the vehicle or may acquire the comfort braking level 116 for the vehicle from the cloud.

In the environment 100, the vehicle 102 further comprises an advanced driver assistance system (ADAS). The ADAS collects vehicle state data 110 and environmental sensing data 112 through various sensors on the vehicle body or inside the vehicle and uses software algorithms to analyze and fuse the vehicle state data 110 and environmental sensing data 112 to extract valuable information to provide a basis for subsequent decision-making. The processed data is then provided to the controller 120 so that the controller 120 can control vehicle braking.

In the environment 100, the vehicle 102 further comprises acquiring user data 114, e.g., through input/output devices for communication with the user, in-vehicle (especially in-cabin) acquisition devices, or a driver monitoring system (DMS). In some examples, in addition to the vehicle state data 110 and environmental sensing data 112, the controller 120 may also determine the comfort braking level 116 based on user data 114.

In some examples, the user data 114 may comprise braking modes (e.g., selection of whether there are infant/child passengers in the vehicle) input by the driver or passenger via an input/output device, which may reflect the driver's/passenger's personalized needs for comfort braking. In some examples, the user data 114 may further comprise data related to the driver and/or passengers collected by in-cabin sensors. For example, image data collected by in-cabin cameras may be used to determine whether there are infant/child passengers in the vehicle.

In some examples, the user data 114 may further comprise driver state data collected by the DMS, which may reflect the driver's need for and/or satisfaction with the braking level. For example, the vehicle 102 further comprises a DMS, and other vehicle systems can also provide driver state data through the DMS. For example, by monitoring the driver's facial expressions through in-vehicle cameras to determine whether there are abnormal behaviors such as fatigue, distraction, yawning, or closing eyes as well as driving behavior habits, such as long-term recording of the driver's driving behaviors, e.g. acceleration, deceleration, steering, braking, and other operating habits, a basis for personalized driving assistance may be provided. In some examples, if the driver is detected to have abnormal behavior as described above, the braking level may be adjusted (e.g., raised) to provide the driver with a more comfortable braking sensation.

In some examples, driver state data provided by the DMS may be used to determine the comfort braking level 116. The DMS can integrate data from different sensors, such as cameras, heart rate sensors, and pressure sensors installed inside the vehicle, and use image processing and analysis technology to monitor the driver's condition. For example, the current comfort braking level 116 may be evaluated based on driver state data (e.g., emotions like fatigue, anger, agitation, anxiety, and stress) to determine that switching the comfort braking level 116 is needed.

In the environment 100, the multimodal data related to the vehicle 102 may comprise vehicle state data 110, environmental sensing data 112, and user data 114. The controller 120 may determine a comfort braking level 116 for the vehicle based on the multimodal data acquired by the vehicle 102, and control the braking of the vehicle 102 through the vehicle's braking system 122 according to the determined comfort braking level 116.

In some examples, the multimodal data integrates environmental sensing data 110 that can reflect the external environment 100 of the vehicle and vehicle state data 112, as well as user data 114 that can reflect the personalized braking needs of the driver/passenger. A comfort braking level 116 is determined based on the environmental sensing data 110 and the vehicle state data 112, or based on all three, so that the comfort braking level 116 determined by the controller 120 can reflect the safe braking distance that must be maintained under the actual conditions of the sensed external environment of the vehicle. Combined with the personalized needs of the driver/passenger for braking comfort, the braking system 122 achieves comfort braking that takes into account both comfort and safety.

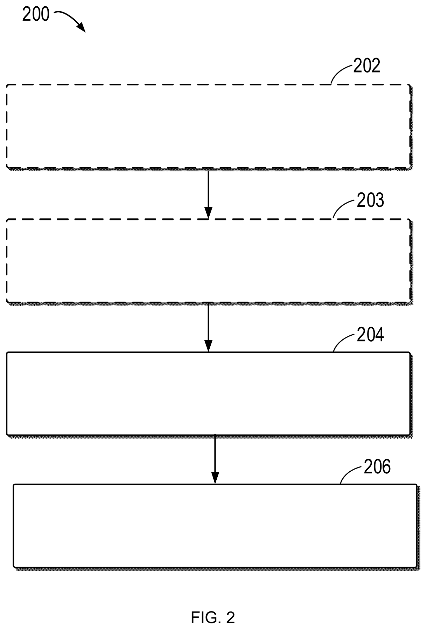

FIG. 2 shows a flow chart of a method 200 for braking a vehicle according to some examples of the present disclosure. The method 200 may be performed, e.g., by a controller 120 in the environment 100 shown in FIG. 1. As shown in FIG. 2,

in block 204, the method 200 may acquire a comfort braking level for the vehicle determined based on multimodal data related to the vehicle. This multimodal data comprises vehicle state data and environmental sensing data. Different comfort braking levels are used to control the braking system of the vehicle to perform different levels of comfort braking control. For example, in the environment 100 as shown in FIG. 1, the controller 120 may acquire a comfort braking level 116 for the vehicle 102 determined based on the multimodal data associated with the vehicle 102, the multimodal data comprising vehicle state data 110 and environmental sensing data 112. In some examples, the controller 120 may obtain the comfort braking level 116 from itself or from the cloud. For example, in the environment 100 as shown in FIG. 1, the higher the comfort braking level 116, the smoother the rate of change of acceleration or the longer the smooth stage of acceleration change during braking, resulting in a more comfortable braking experience.

In block 206, the method 200 may control the braking of the vehicle based on the comfort braking level of the vehicle determined in block 204. For example, in the environment 100 as shown in FIG. 1, the controller 120 may control the braking system 122 of the vehicle according to the comfort braking level 116, thereby controlling the vehicle 102 to perform comfort braking.

Through the method 200, the vehicle state data and environmental sensing data of the vehicle acquisition devices are fused in multimodal data, and the actual conditions of the vehicle's external environment can be sensed. Comfort braking is performed according to the actual conditions of the vehicle's external environment, further improving comfort and the user experience.

In some examples, optionally, in block 202, the method 200 may acquire multimodal data. In some examples, the multimodal data may be provided by various systems and sensors of the vehicle. For example, in the environment 100 as shown in FIG. 1, multimodal data comprising vehicle state data 112 and environmental sensing data 110 may be collected from internal acquisition devices and external devices. In some examples, the multimodal data may be provided to the controller 120 in FIG. 1 or the cloud for determining the comfort braking level.

In some examples, optionally, in block 203, the method 200 may further determine a comfort braking level for the vehicle based on multimodal data. For example, the controller 120 of FIG. 1 may locally determine the comfort braking level for a vehicle based on multimodal data. Alternatively, the comfort level of the vehicle can be determined by the cloud based on multimodal data. The controller 120 may then obtain the comfort braking level for the vehicle from the cloud. That is, multimodal data related to the vehicle may be sent to the cloud, and the cloud may determine the comfort braking level based on the multimodal data and return it to the vehicle.

In some examples, the comfort braking level can be flexibly selected to be determined locally by the controller 120 or in the cloud, depending on environmental factors, the specifics of the vehicle, and actual conditions. For example, cloud-based determination can be used in cities when there is good network coverage, while local determination is relied upon in remote mountainous areas when there is no network coverage. For example, in scenarios where real-time performance and independence are critical, such as vehicle performance testing, local determination can be chosen, while in driving scenarios requiring large-scale data optimization and analysis to obtain more accurate comfort braking levels, cloud determination can be chosen.

Determining the vehicle's comfort braking level by a local controller offers enhanced real-time performance, is network-independent, highly autonomous, and capable of rapid response, resulting in smoother determination of the vehicle's braking level and an improved driving experience. Determining the comfort braking level for the vehicle through the cloud has more powerful computing capabilities, can process a larger amount of multimodal data, can collect data from various vehicles for learning and analysis, and can continuously optimize the comfort braking level determination model. Moreover, the local and cloud-based determination methods can serve as backups for each other, allowing the other to take over if one fails, thus improving vehicle performance and adaptability.

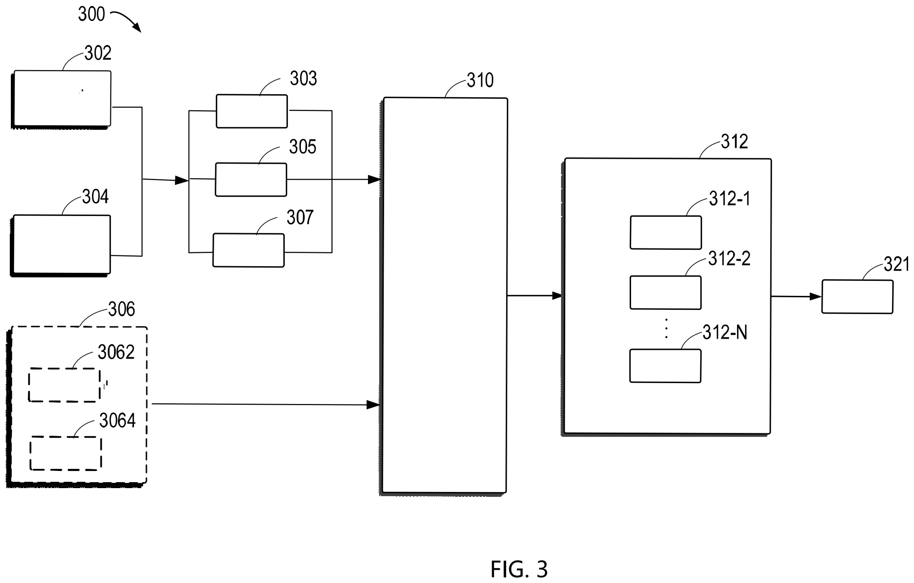

FIG. 3 shows a schematic diagram of a process 300 for determining a comfort braking level according to some examples of the present disclosure. For example, the process 300 may be performed by an artificial intelligence (AI) model 310, such as a machine learning model, like a deep neural network (DNN), convolutional neural network (CNN), or recurrent neural network (RNN). **In** some examples, the multimodal data may comprise, e.g., vehicle state data 302 provided by an in-vehicle system and collected environmental sensing data 304.

In some examples, vehicle state data 302 and environmental sensing data 304 can be collected and a plurality of comfort braking levels 312 can be set. Feature extraction is performed on the vehicle state data 302 and environmental sensing data 304 and a training set is established based on the extracted feature values and the labeled comfort braking levels. For example, the Al model 310 can be trained, with each feature value as the model input and the labeled results of the plurality of comfort braking levels 312 as the model output, using the training set to train the Al model 310.

In some examples, the multimodal data may further comprise user data 306. In some examples, user data 306 may comprise, e.g., a braking mode 3062 input by the user. In some examples, the vehicle may provide a variety of braking modes for selection by the user, such as an infant/child mode, a commuter mode, a sport mode, etc. Infant/child mode indicates that there are infant or child passengers in the vehicle and braking needs to be as smooth as possible, thus requiring the highest comfort braking level. For example, the rate of change in acceleration needs to be kept as flat as possible to ensure the safety of the infants and children. Sport mode indicates that the vehicle is driving in off-road or highway scenarios and applies the lowest comfort braking level. For example, by appropriately increasing the rate of change of acceleration, the braking sensation can be enhanced, the safe braking distance reduced, and safety improved in off-road or highway scenarios. Commuter mode indicates a comfort braking level that falls between the two modes when the vehicle is commuting on city roads. For example, a moderate rate of change of acceleration can be used to balance the braking sensation and the smoothness sensation and to appropriately reduce the braking distance while reducing the feeling of jerking.

In some examples, user data 306 may comprise, e.g., data collected by in-vehicle acquisition devices associated with the user 3064. Data 3064 associated with the user may comprise, e.g., DMS data. In some examples, the comfort level for the current situation may be selected from among a variety of comfort levels based on the user's current mood or expression, or it may be switched from the current level of comfort to the next level of comfort. In some examples, the data 3064 associated with the user may further comprise image data of the vehicle interior and the presence of infant/child passengers in the vehicle may be determined based on the image data. If it is determined that an infant/child passenger is present in the vehicle, infant/child mode may be selected and a comfort braking level associated with infant/child mode may be selected.

In some examples, the AI model 310 may select a comfort braking level 321 for the current situation from a plurality of comfort braking levels 312 based on the vehicle state data 302, environmental sensing data 304, and user data 306. In this instance, the AI model 310 can be trained based on the vehicle state data 302, environmental sensing data 304, user data 306, and comfort braking level so that the Al model 310 can determine the comfort braking level 321 based on at least one of the vehicle state data 302, environmental sensing data 304, and user data 306.

In some examples, the data 3064 associated with the user may comprise DMS data. In addition to being used to select a comfort braking mode, the DMS data may also be used to train the model 310 as user feedback reflecting subjective comfort braking levels. The DMS data is, e.g., driver state data collected by the DMS and provided by the ADAS. For example, the subjective comfort score may be assessed based on the mood of the driver in the driver state data, and the different subjective comfort scores correspond to different comfort braking levels. For example, anger may correspond to the lowest level of comfort, happiness may correspond to the highest level of comfort, and other emotions may have corresponding intermediate levels. In such examples, the Al model 310 may learn and train on the vehicle state data 302, the environmental sensing data 304, and the driver state data so that the Al model 310 can evaluate the comfort braking level based on the subjective comfort score under different vehicle states and environmental conditions and thus select the appropriate comfort braking level 321 from the plurality of comfort braking levels 312.

In some examples, vehicle feedback data associated with comfort may also be used as feedback to train the AI model 310, such as collecting operational data of the vehicle, such as vibrations, noise, etc., through onboard sensors. Vibration or noise data may as objective comfort braking levels The Al model 310 is then trained based on the vehicle state data 302, the environmental sensing data 304, and the vibration or noise data so that the Al model 310 can evaluate the comfort braking level based on the vehicle vibration or noise under different vehicle state and environmental conditions and select the comfort braking level 321 for the current situation from the plurality of comfort braking levels 312.

In some examples, the vehicle comprises a plurality of preset comfort braking levels 312, e.g., Level 1 comfort braking 312-1, Level 2 comfort braking 312-2... Level N comfort braking 312-N. The controller of the vehicle selects a comfort braking level 321 for the vehicle from the plurality of comfort braking levels 312 based on the results determined by the AI model 310. Different comfort braking levels may correspond to different braking control parameters. In some examples of the present disclosure, the braking control parameters may comprise one or more parameters related to the braking control curve (e.g., braking pressure-time curve, braking acceleration-time curve, braking force distribution curve, etc.). Through the braking control parameters, a braking control curve of the vehicle can be constructed to guide the vehicle's braking control system to brake.

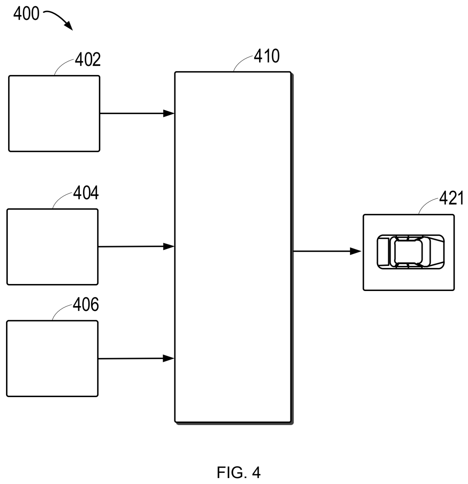

As shown in FIG. 3, in some examples, the inclination 303, obstacle height 305, and vehicle weight 307 may be calculated from the vehicle state data 302 and the environmental sensing data 304, e.g., by a physical model or an Al model. The determination of vehicle weight 307, inclination 303, and obstacle height 305 will be specifically described in FIGS. 4, 5, and 6 below.

In some examples, the comfort braking level 321 for a vehicle may be determined based on one or more of the inclination 303, obstacle height 305, and vehicle weight 307. For example, the AI model 310 can determine a comfort braking level 321 for the vehicle based on the inclination 303, obstacle height 305, and vehicle weight 307.

In some examples, the comfort braking level 321 may be selected by the Al model 310 from a plurality of comfort braking levels 312 (312-i (1≦i≦N)) based on at least one of the inclination 303, obstacle height 305, and vehicle weight 307. In some examples, the vehicle's controller (e.g., controller 120 in FIG. 1) may also select a comfort braking level 321 for the vehicle from a plurality of comfort braking levels 312 (312-i (1≦i≦N)) based on at least one of the inclination 303, obstacle height 305, and vehicle weight 307. In this way, the comfort braking level can be adjusted to account for environmental conditions, e.g., an appropriate level can be selected depending on the inclination and obstacle height, increasing braking comfort.

In some examples, the comfort braking level 321 may be selected by the Al model 310 or the vehicle's controller from a plurality of comfort braking levels 312 (312-i (1≦i≦N)) based on the inclination 303, obstacle height 305, vehicle weight 307, and user data 306. In this way, environmental conditions and individual user needs can be taken into account and a braking level that is more suitable for the environmental conditions and meets individual user needs can be selected, thereby further improving braking comfort.

In some examples, the inclination 303 may refer to the slope inclination, e.g., when a vehicle is climbing or going downhill. In some examples, the inclination 303 may refer to the vehicle's inclination, e.g., the inclination of the vehicle body relative to the horizontal plane caused by uneven ground, uneven load distribution, etc. when the vehicle is stationary (and not on a slope).

In some examples of the present disclosure, vehicle weight 307 may refer to the weight (or gravity) of the vehicle on flat ground. It will be understood that when a vehicle is on a slope, the component of gravity is related to the degree of inclination (e.g., the slope or the vehicle's inclination) and needs to be considered separately. In some examples, the vehicle weight 307 may be determined when the vehicle is on flat ground (e.g., when the vehicle is detected to be level), and the inclination 303 may be determined when the vehicle is on a slope (e.g., when the vehicle is detected to be tilted). For example, when a vehicle is on a slope, the comfort braking level of the vehicle can be determined based on both the vehicle's weight and the inclination when it is on flat ground.

In some examples, the comfort braking level 321 for a vehicle may be determined based on the inclination 303, obstacle height 305, and vehicle weight 307. For example, if no obstacle of a specific type is detected in front of the vehicle, the obstacle height 305 is entered as the default value or 0; if no slope is detected in front of the vehicle, the inclination 307 is entered as the default value or 0. In this way, environmental conditions and individual user needs can be taken into account and a braking level that is more suitable for the environmental conditions and meets individual user needs can be selected, thereby further improving braking comfort.

Since the external environment of a vehicle may change significantly and is difficult to predict, in some examples, comfort braking control can sense the surrounding environment more comprehensively by incorporating environmental sensing data collected by vehicle sensors or cameras. The comfort braking level is determined based on different environmental conditions. For example, when a vehicle is driving on a flat road, the tires are subjected to rolling friction (also known as rolling resistance). Under the same conditions, the greater the rolling resistance, the less braking force is required. For example, when a vehicle is traveling on flat ground, the magnitude of the rolling friction *Fᵣ* can be determined according to the following Formula (1), ${F}_{r} = {ρ}_{r} ⋅ W$ where *ρᵣ* is the rolling friction coefficient and *W* is the vehicle's weight.

When a vehicle is traveling on a slope, the climbing resistance (including uphill and downhill) will act in the opposite direction to the direction of the vehicle's travel, and the vehicle inclination will also affect the amount of braking force required. For example, when a vehicle is traveling on a slope, the magnitude of the rolling friction *Fᵣ* can be determined according to the following Formula (2), ${F}_{r} = {ρ}_{r} ⋅ W ⋅ cosβ$ where *ρᵣ* is the rolling friction coefficient, *W* is the vehicle's weight, and *β* is the angle between the slope and the ground. When a vehicle is stationary on a slope, the magnitude of the static friction *F_{f}* is equal to the component of gravity along the slope, that is, ${F}_{f} = W ⋅ sinβ$

In addition, the vehicle is also affected by air resistance during driving. The greater the air resistance, the less braking force is required under the same conditions. For example, the air resistance *Fₐ* may be determined according to the following Formula (4) ${F}_{a} = {ρ}_{a} ⋅ A ⋅ {v}^{2}$ where *ρₐ* is the air resistance coefficient, A is the surface area of the vehicle in contact with the air, and *v* is the speed of the vehicle. When a vehicle brakes, air resistance acts in the same direction as the braking force, both hindering the vehicle's forward movement. As air resistance also hinders the vehicle's forward movement, the total resistance of the vehicle increases, the absolute value of the acceleration increases, and the braking distance decreases.

Air resistance may help reduce the speed of a vehicle during braking. This means that the braking system (such as brake discs and brake pads) needs to bear relatively less pressure.

In some examples, the vehicle's braking system may be fine-tuned according to the vehicle's aerodynamic characteristics, such as adjusting the pressure distribution of the brake calipers. When a vehicle brakes at high speed, air resistance puts significant pressure on the front of the vehicle. To maintain vehicle stability and balance braking performance, the pressure on the front brake calipers can be increased to better utilize air resistance for braking and prevent the vehicle from tilting forward. In these examples, the comfort braking level may be associated with the caliper pressure of different wheels. Different comfort braking levels may correspond to different pressure distributions.

In some examples, when there are obstacles (such as speed bumps or rocks) or slopes (especially uphill) in front of the vehicle, it is desirable to use a higher comfort braking level, which results in smaller acceleration and smoother acceleration changes, reducing the jerking sensation during braking. The comfort braking level may be related to the height and inclination of the obstacle (e.g., the angle of a slope relative to the ground). For example, the higher the obstacle or the longer the slope, the smaller the rate of change of vehicle acceleration or the longer the stage of gradual acceleration change. In these examples, the comfort braking level may correspond to different rates of acceleration change or the duration of stages with different rates of acceleration change.

In some examples, when there is a downhill slope in front of the vehicle, rainy or snowy weather, or a slippery road surface, a relatively low comfort braking level may be used to make the acceleration slightly larger in order to ensure that the vehicle stops, but it is still desirable that the acceleration change is relatively gentle to prevent the vehicle from danger. For example, the stage where the vehicle's acceleration is slightly larger but the rate of change of acceleration is small or the stage where the acceleration change is slightly larger may be prolonged.

In some examples, the purpose of braking on flat ground is primarily to overcome the inertia of the vehicle and to stop the vehicle. The weight of the vehicle is evenly distributed across the four wheels, and the braking force is mainly used to combat the linear motion inertia of the vehicle. As the vehicle goes uphill, the weight of the vehicle shifts to the rear axle, resulting in a relative reduction in the load on the front axle and an increase in the load on the rear axle. This weight shift affects the braking performance of the vehicle. Moreover, due to the vehicle's tendency to slide downward, more factors need to be considered during braking, such as preventing the vehicle from rolling backwards.

In some examples, the vehicle's controller may also determine inclination 303, obstacle height 305, and vehicle weight 307 based on multimodal data (e.g., comprising vehicle state data 302 and environmental sensing data 304) and then determine a comfort braking level 321 for the vehicle based on one or more of the inclination 303, obstacle height 305, vehicle weight 307, and user data 306. In some examples of the present disclosure, inclination and obstacle height can provide richer information about the vehicle's external environment, enabling safer and more comfortable braking.

In some examples, the environmental sensing data 304 may further comprise weather data, road surface humidity data, or downhill presence data. The process 300 may select a comfort braking level 321 for the vehicle from a plurality of comfort braking levels 312 (312-i (1≦i≦N)) for different weather conditions, different surface humidity, or the presence of a downhill slope. In some examples, if the weather is rainy or snowy, the roadside is slippery, or there is a downhill slope, a comfort braking mode with a slightly larger acceleration but a gentler rate of change in acceleration may be selected. In this way, the vehicle can be brought to a complete stop while reducing jerking and preventing skidding, thus improving safety.

FIG. 4 shows a method 400 for determining vehicle weight according to some examples of the present disclosure. In some examples, vehicle state data (e.g., vehicle state data 302 in FIG. 3) may comprise vehicle wheel speed 402 and torque 404 and environmental sensing data (e.g., vehicle state data 304 in FIG. 3) may comprise slope presence information 406. In some examples, vehicle weight may be calculated by the vehicle weight model 410 based on wheel speed 402, torque 404, and slope presence information 406. In some examples, the vehicle weight model 410 may be a physical model that calculates the vehicle weight according to a dynamics formula, or it may be an Al model that has undergone learning and training. The vehicle weight model 410 is described herein in terms of calculating vehicle weight according to a dynamics formula.

For example, slope presence information 406 is used to indicate whether a slope exists in front of the vehicle in the external environment. In some examples, the control system of the vehicle may initiate the determination of vehicle weight 421 of the vehicle when the slope presence information 406 indicates that there is no slope in the external environment, e.g., when the vehicle is on flat ground.

When the slope presence information 406 indicates that there is no slope in the external environment, the vehicle weight 421 can be determined based on the vehicle's wheel speed 402 and torque 404. For example, the vehicle's acceleration can be calculated based on the change in wheel speed 402 over a certain period of time according to the following Formula (5)a, $a = \frac{Δv}{Δt}$ where Δv is the amount of change in wheel speed over a period of time Δt. For example, the traction force of a vehicle can be calculated according to the following Formula (6)F, $F = \frac{T}{r}$ where T is torque and r is wheel radius. Next, the weight of the vehicle can be determined according to Newton's second law F = *ma,* or the weight G of the vehicle can be further calculated using the gravity calculation Formula (7) as the vehicle weight 421, $G = mg$

In some examples, the slope presence information may be obtained by an inertial measurement unit, a global positioning system (GPS), a lidar, or a camera installed on the vehicle. For example, image processing technology can be used to process images of the road ahead collected by the acquisition device to obtain environmental sensing data that comprises slope presence information.

In some examples, the wheel speed 402 of the vehicle may be detected by wheel speed sensors installed on the wheels of the vehicle. The wheel speed sensors can be magnetoelectric wheel speed sensors, Hall effect sensors, photoelectric wheel speed sensors, etc.

In some examples, the acceleration of the vehicle may also be directly detected by an accelerometer installed on the vehicle without having to calculate it based on wheel speed. The accelerometer may be a microelectromechanical systems (MEMS) accelerometer, piezoelectric accelerometer, fiber optic accelerometer, thermistor accelerometer, etc. A plurality of acceleration sensors are installed in different locations on the vehicle, such as the body, chassis, or suspension system, to more comprehensively monitor the vehicle's dynamic behavior.

In some examples, the comfort braking level for the current vehicle weight can be determined based on the vehicle weight 421. For example, different comfort braking levels may correspond to different braking forces or accelerations. In some examples, an appropriate comfort braking level may be output by an AI model (e.g., the Al model 310 in FIG. 3). In some examples, the greater the vehicle weight 421, the greater the inertia, and the greater the braking distance when the initial speed and braking force are the same. Therefore, when making predictions, the Al model may expect to increase the braking force slowly (e.g., at an appropriate rate) so that the vehicle's acceleration gradually increases and the vehicle's speed decreases smoothly, avoiding the jerking sensation caused by sudden braking. In some examples, the Al model may select acceleration curves corresponding to different comfort braking levels based on the vehicle's weight. For example, for vehicles with greater vehicle weight, the Al model may, when making predictions, expect to set the acceleration curve to be flatter.

In some examples, different comfort braking levels (e.g., the plurality of comfort braking levels 312 in FIG. 3) may correspond to different braking pressures or braking pressure distributions. For example, different vehicle weights result in different pressures required for braking, and the greater the vehicle weight, the greater the braking pressure required. In addition, during braking, the weight distribution of the vehicle changes, with the weight on the front bearing increasing and the weight on the rear bearing decreasing. This is because inertia causes the center of gravity of the vehicle to shift forward when the vehicle is decelerated, and the greater the vehicle weight, the more pronounced the shift. Therefore, it is also necessary to adjust the distribution ratio of braking force between the front and rear wheels. For example, for light vehicles, the braking force distribution between the front and rear wheels may tend to be more even; while for heavy vehicles, since the center of gravity shifts forward significantly during braking, more braking force will be distributed to the front wheels. In these examples, different pressure distribution schemes can also be set according to vehicle weight to apply different braking forces to the front and rear axles or front and rear wheels to prevent the vehicle from losing control, such as fishtailing (rear wheels locking up first) or losing steering ability (front wheels locking up first), thereby improving safety.

The vehicle weight model 410 may be deployed in the controller or may be deployed in other devices outside the controller. For example, the vehicle weight model 410 can be deployed in the cloud. The controller accesses the cloud and sends the wheel speed 402, torque 404, and slope presence information 406 to the vehicle weight model in the cloud. The vehicle weight model 410 determines the vehicle weight and then sends it to the controller. The vehicle weight model 410 may be a physical model that characterizes the relationship between wheel speed, torque, and slope presence information and vehicle weight. The vehicle weight is calculated based on the wheel speed, torque, and slope presence information in the multimodal data. The vehicle weight model may also be an Al model trained based on samples. For example, slope presence information, wheel speed, and torque from the multimodal data can be input into the vehicle weight model, and the vehicle weight model can output the corresponding vehicle weight. In some examples, vehicle weight can be in a variety of forms that characterize the weight of a vehicle, such as weight values, weight classes, and passenger capacity.

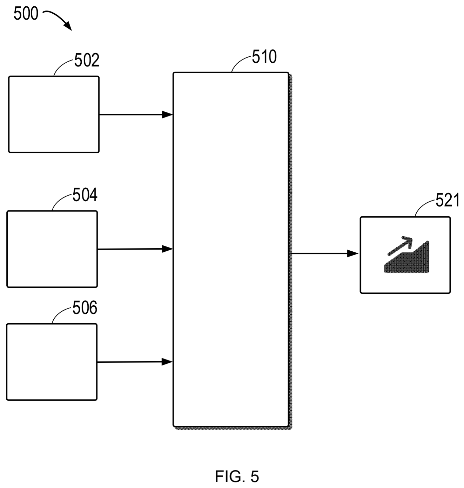

FIG. 5 shows a method 500 for determining inclination according to some examples of the present disclosure. In some examples, inclination refers to the angle of inclination of a slope or a vehicle on a slope relative to the horizontal plane. The inclination may be the inclination 303 in FIG. 3.

In some examples, the environmental sensing data comprises slope presence information 502 and ambient air pressure 504, and the vehicle state data may comprise wheel speed 506. In some examples, the inclination may be calculated by an inclination model 510 based on the slope presence information 502, ambient air pressure 504, and wheel speed 506. In some examples, the inclination model 510 may be a physical model that calculates the inclination according to a dynamics formula, or it may be an Al model that has undergone learning and training. How the inclination model 510 calculates the inclination according to a dynamics formula is described herein.

In this instance, it can be determined that there is a slope in the external environment based on the slope presence information 502, and when it is determined that there is a slope, the determination of the inclination is initiated. Upon determining the presence of a slope, the distance the vehicle travels during the climbing period is determined based on the vehicle's wheel speed 506. The climbing period can be greater than or equal to, e.g., 10 seconds, which can be counted from when the vehicle starts going uphill or downhill, or it can be selected as the time the vehicle is on the slope. For example, the wheel speed v may be converted to revolutions per second, and the number of revolutions per second can be multiplied by the climbing time Δt to obtain the number of revolutions n of the wheel during the climbing period. Then, the circumference of the wheel can be calculated using the radius r of the wheel according to the following Formula (8),C $C = 2 πr$ and by multiplying the circumference C by the number of revolutions n of the vehicle, the distance traveled by the vehicle during the climbing period s is obtained according to the following Formula (9) $s = C ⋅ n$

For example, the height change of the vehicle during the climbing period can be determined based on the ambient air pressure 504. The ambient air pressure 504 may be collected, e.g., by a barometric pressure sensor on the vehicle. In some examples, the height change of the vehicle during the climbing period can be calculated using the atmospheric altitude Formula (10) based on the ambient air pressure *p*0 at the start and the ambient air pressure *pt* measured at the end of the climbing period, $h = \frac{{T}_{0}}{L} \left[1-{\left(\frac{pt}{p 0}\right)}^{\frac{RL}{g}}\right]$ where h is the vehicle's height change (or climbing height), *T₀* is the standard sea-level temperature (approximately 288.15 Kelvin), *L* is the temperature lapse rate (approximately - 0.0065 Kelvin/m in the troposphere (the area where vehicles typically travel)), *R* is the gas constant (approximately 287.058 joules/(kg·Kelvin) for air), and *g* is the gravitational acceleration (approximately 9.80665 m/s²). In some examples, the height change of the vehicle during the climbing period can also be determined based on altitude data from a positioning system (e.g., GPS or BeiDou system). In some examples, the height change of the vehicle during the climbing period can also be determined using a slope meter or a binocular vision system.

Next, the inclination 521 can be determined based on the changes in travel distance and height. The angle β can be calculated as the inclination 521 according to the following Formula (11), $β = arcsin \left(\frac{h}{s}\right)$ where h represents the change in height (i.e., the climbing height) and s represents the travel distance.

As shown in FIG. 5, the inclination 521 of the vehicle can be determined by the inclination model 510 based on the vehicle's slope presence information 502, ambient air pressure 504, and wheel speed 506. The inclination model 510 may be deployed in the controller or may be deployed in other devices outside the controller. For example, the inclination model may be deployed in the cloud. The controller accesses the cloud and sends the slope presence information, ambient air pressure, and wheel speed to the inclination model in the cloud. The inclination model then determines the vehicle's inclination and sends it to the controller. The inclination model 510 may be a physical model that characterizes the relationship between slope presence information, ambient air pressure, wheel speed, and inclination. Based on the slope presence information 502, ambient air pressure 504, and wheel speed 506 in the multimodal data, the vehicle's inclination 521 is calculated according to the physical model. The inclination model 510 may also be an Al model trained based on samples. The slope presence information 502, ambient air pressure 504, and wheel speed 506 in the multimodal data are input into the inclination model and the inclination model outputs the corresponding inclination 521.

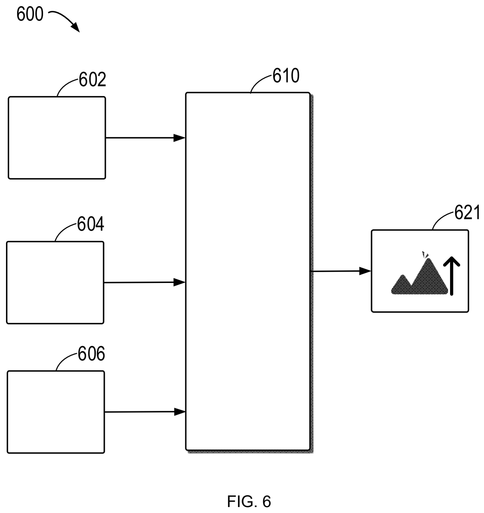

FIG. 6 shows a method 600 for determining the height of an obstacle of a vehicle according to some examples of the present disclosure. In some examples, obstacle height refers to the distance of the obstacle from the ground to its highest point. In some examples, the multimodal data further comprises the type of obstacle of the vehicle. The type of obstacle in the vehicle's surrounding environment may be detected by means of lidar, millimeter-wave radar, cameras, or ultrasonic sensors. Alternatively, data from a plurality of sensors may be fused to obtain the type of obstacle of the vehicle.

In some examples, the environmental sensing data comprises obstacle type 602 and the vehicle state data may comprise wheel speed 604 and requested acceleration 606. In some examples, the obstacle height may be calculated by an obstacle height model 610 based on the obstacle type 602, wheel speed 604, and requested acceleration 606. In some examples, the obstacle height model 610 may be a physical model that calculates the obstacle height according to a dynamics formula, or it may be an Al model that has undergone learning and training. The obstacle height model 610 is described herein in terms of calculating the obstacle height according to a dynamics formula.

In some examples, the environmental sensing data 602 may be an environmental image captured by a camera mounted on the vehicle body, and the environmental image may be processed to identify various objects therein and classify the objects to determine the type of obstacle. For example, various obstacle types in the image may be identified by machine learning (e.g., via a neural network). In some examples, it may be determined whether the obstacle in front of the vehicle is a speed bump (or a stone of a corresponding size) based on obstacle type 602. When it is determined that the obstacle is a speed bump, the height determination of the obstacle is activated.

In some examples, the requested acceleration requested by the vehicle's powertrain may be obtained directly from the vehicle's controller (e.g., electronic control unit (ECU))*a_{target}.* For example, the ECU may receive signals from a plurality of sensors, such as an accelerator pedal position sensor, a brake pedal position sensor, and wheel speed sensors, and then calculate the vehicle's requested acceleration based on these signals and a preprogrammed control strategy*a_{target}*.

In some examples, when it is determined that the obstacle is a speed bump, the actual acceleration and travel distance of the vehicle during the time period of running over the obstacle can be calculated based on the vehicle's wheel speed 604. It will be understood that the time period for running over an obstacle is usually short, such as within 1 second or 2 seconds. For example, the wheel speed change Δv of the vehicle during the time period it runs over the obstacle Δt can be calculated based on the wheel speed v, and then the actual acceleration can be calculated based on the acceleration calculation formula (as shown in Formula (12) below) ${a}_{actual} = \frac{Δv}{Δt}$ For example, the wheel speed can be used to calculate the number of revolutions, and the actual acceleration and travel distance of the vehicle during the time period it runs over the obstacle can be calculated based on the number of revolutions and the distance between the wheels, similar to the description of inclination above.

The height h of the obstacle may then be calculated according to the following Formulas (13) and (14), ${a}_{actual} = {a}_{target} ⋅ cos β$ $β = arcsin \left(\frac{h}{s}\right)$ where β is the angle between the obstacle and the ground, s is the distance the vehicle travels during the period it runs over the obstacle, *a_{actual}* is the actual acceleration calculated based on the wheel speed, and *a_{target}* the requested acceleration is read directly from the controller.

It will be understood that both slopes and obstacles can be approximated as physical models of slope. The only difference between the two is their length. Obstacles (e.g., speed bumps) are very short slopes. When a vehicle runs over an obstacle, it will jump up instantaneously, so the acceleration angle undergoes very significant changes. Therefore, it is more reasonable to use the acceleration change formula for calculation. On the other hand, slopes are long slopes with a long driving time, so the acceleration changes are not very obvious. Therefore, height and distance can be used for calculation. In some examples, the inclination of a slope may also be calculated using an acceleration change formula, which is not limited herein.

As shown in FIG. 6, the obstacle height 621 of the vehicle may be determined based on the obstacle type 602, wheel speed 604, and requested acceleration 606 in the environmental sensing data of the vehicle through the obstacle height model 610. The obstacle height model 610 may be deployed in the controller or may be deployed in other devices outside the controller. For example, the obstacle height model 610 may be deployed in the cloud. The controller accesses the cloud and sends the obstacle type, wheel speed, and requested acceleration to the obstacle height model 610 in the cloud. The obstacle height model 610 determines the obstacle height and then sends it to the controller. The obstacle height model 610 may be a physical model that characterizes the obstacle type, wheel speed, and requested acceleration in relation to the obstacle height. Based on the obstacle type 602, wheel speed 604, and requested acceleration 606 in the multimodal data, the obstacle height 621 of the vehicle is calculated according to the physical model. The obstacle height model 610 may also be an Al model trained based on samples. The obstacle type 602, wheel speed 604, and requested acceleration 606 in the multimodal data are input into the obstacle height model 610, and the obstacle height model 610 outputs the corresponding obstacle height 621.

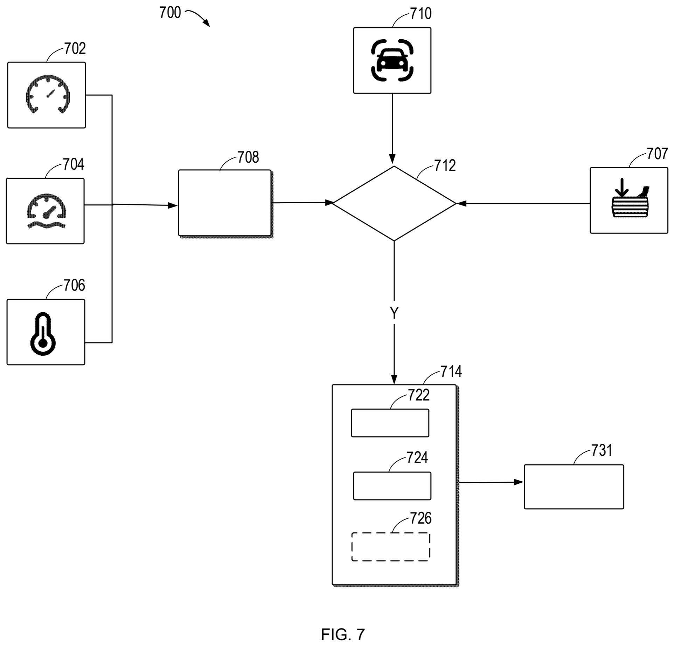

FIG. 7 shows a schematic diagram of a process 700 for determining whether to activate the comfort braking function according to some examples of the present disclosure. In some examples, vehicle state data may comprise vehicle speed 702 and brake pedal pressure 704, and environmental sensing data may comprise the vehicle's ambient temperature 706.

In some examples, vehicle speed 702 may be detected by wheel speed sensors, GPS systems, Doppler radar, inertial measurement units, etc., or the data from a plurality of sensors may be fused to obtain a more accurate and reliable vehicle speed.

In some examples, the wheel speed signal of the vehicle may be collected by a wheel speed sensor, and then the vehicle speed 702 may be calculated by the control unit (e.g., ECU) based on the wheel speed signal (e.g., vehicle speed = wheel circumference × wheel speed). For example, the pedal signal may be acquired by a strain gauge sensor, piezoresistive sensor, or capacitive sensor located on the brake pedal, and the brake pedal pressure 704 may be calculated by the control system (e.g. ECU) based on the pedal signal. For example, the ambient temperature 706 may be collected by a temperature sensor disposed on the vehicle body.

In some examples, the wheel cylinder pressure 704 may also be obtained directly. For example, the wheel cylinder pressure of the vehicle may be detected by a pressure sensor, strain gauge sensor, optical sensor, or magnetostrictive sensor. The data from a plurality of sensors may also be fused to obtain a more accurate and reliable wheel cylinder pressure 704.

As shown in FIG. 7, the brake disc temperature 708 of the vehicle may be calculated based on the vehicle speed 702 and the wheel cylinder pressure 704. For example, the brake disc temperature 708 may be calculated according to the following Formula (15), ${T}_{disc} = {T}_{env} + ΔT$ where *T_{disc}* is the brake disc temperature, *Tₑₙᵥ* is the ambient temperature, and ΔT is the rate of temperature change of the brake disc during operation. The rate of temperature change may be calculated using the frictional heat generation formula (as shown in Formula (16) below), $ΔT ∝ p ⋅ v$ where p is the wheel cylinder pressure change rate, which may be derived from the wheel cylinder pressure 704 and is related to brake pedal pressure, and v is the vehicle speed 702.

In some examples, the brake disc temperature 708 may also be determined based on the vehicle speed 702 and the brake pedal pressure 704, e.g., based on the calculated wheel cylinder pressure 704, the brake disc temperature 708 may be calculated based on the wheel cylinder pressure 704 and the vehicle speed 702.

At 712, a determination may be made whether to activate the comfort braking function based on the brake disc temperature 708. For example, the brake disc temperature 708 may be compared to a temperature threshold. If the brake disc temperature 708 is above the temperature threshold, indicating that the braking system function has been degraded, then the comfort braking function is not activated. That is, the control system of the vehicle will not take over the braking of the vehicle, e.g., it will not execute the steps in method 200 in FIG. 2, but will continue to allow the driver to manually control the braking process.

If the brake disc temperature 708 is below or equal to the temperature threshold, indicating that the braking system is functioning well, then it is determined to activate the comfort braking function. That is, the vehicle's control system takes over the vehicle's braking and performs the steps in method 200 in FIG. 2. This method allows for the assessment of the vehicle's braking system functionality, and the comfort braking function is activated only when the braking system is confirmed to be functioning properly. This prevents safety hazards caused by degraded braking system functionality and improves the safety of comfort braking.

In some examples, the presence of an emergency for the vehicle may be judged and used to determine whether to activate the comfort braking function. For example, it is possible to determine whether an emergency is present for the vehicle based on at least one of the vehicle state data and environmental sensing data, and based on the determination of an emergency, to determine whether to activate the comfort braking function. The comfort braking function is not activated when an emergency is determined to be present for the vehicle and is activated when an emergency is determined to not be present for the vehicle. Upon determining that the comfort braking function is to be activated, the comfort braking level for the vehicle can be determined based on multimodal data.

In some examples, vehicle state data may comprise the activation state of the vehicle's safety system 710 or the brake pedal pressure 704. For example, the vehicle's safety system 710 may comprise functions such as ABS, TCS, and AEB that are triggered only in emergency situations. In some examples, it is possible to detect at 712 whether the vehicle's safety system 710 has been triggered. If it has been triggered, this indicates that the vehicle is in an emergency and the comfort braking function is not activated.

In some examples, the activation of the comfort braking function can be determined based on the brake pedal pressure 704. For example, at 712, the brake pedal pressure is compared with the pressure threshold, and if the brake pedal pressure is greater than the pressure threshold, this indicates that the driver is tending to brake suddenly and the vehicle is in an emergency, and the comfort braking function is not activated.

In some examples, the activation of the comfort braking function may also be determined based on environmental sensing data. For example, the environmental sensing data may comprise at least one of time to collision (TTC) and the distance between the vehicle and the vehicle in front or a target object (e.g., a suddenly appearing object). In some examples, the activation of the comfort braking function may be determined based on time to collision. For example, if the time to collision is less than a time threshold, this indicates that the vehicle may brake suddenly in a short period of time and is in an emergency, and the comfort braking function will not be activated. In some examples, the activation of the comfort braking function may be determined based on the distance between the vehicle and the vehicle in front. For example, if the distance between the vehicle and the vehicle in front is less than a distance threshold (e.g., a preset safe braking distance), this indicates that the vehicle may brake suddenly in a short period of time and is in an emergency, and the comfort braking function will not be activated. In some examples, the activation of the comfort braking function may also be determined by detecting the presence of a target object (e.g., a vehicle cutting in). For example, if a target object is detected, it is determined that the vehicle is in an emergency and the comfort braking function is not activated. By using the aforementioned emergencies to determine whether to activate the comfort braking function, the accidental activation of the comfort braking function in emergencies is prevented, further improving the safety of vehicle comfort braking.

If the comfort braking function is determined to be activated at 712, at 714, the comfort braking level 731 for the vehicle may be determined based on the vehicle state data 722 and the environmental sensing data 724. In some examples, the comfort braking level 731 for the vehicle may also be determined individually or in combination according to user data 726 at 714.

Through process 700, it can be judged whether to activate the comfort braking function by detecting braking system function and emergencies. The comfort braking function will be activated only when the vehicle braking system is in good condition and there is no emergency. The control system takes over the braking process, greatly improving braking safety.

In some examples, the brake disc temperature model may be deployed in the controller or in other devices outside the controller. For example, the brake disc temperature model may be deployed in the cloud. The controller accesses the cloud and sends the vehicle state data and environmental sensing data to the brake disc temperature model in the cloud. The brake disc temperature model determines the brake disc temperature and then sends it to the controller. The brake disc temperature model 710 may be a physical model that characterizes the vehicle speed, wheel cylinder pressure, ambient temperature, and brake disc temperature. Based on the vehicle speed 702, wheel cylinder pressure 704, and ambient temperature 706 in the multimodal data, the vehicle's brake disc temperature is calculated according to the physical model. The brake disc temperature model 710 may also be an Al model trained based on samples. The vehicle speed 702, wheel cylinder pressure 704, and ambient temperature 706 in the multimodal data are input into the brake disc temperature model and the brake disc temperature model outputs the corresponding brake disc temperature. The vehicle controller determines whether to activate the comfort braking function based on at least one of the determined brake disc temperature, emergency-related vehicle state data, and environmental sensing data, combined with preset safety rules.

When it is determined that the comfort braking function is to be activated, the comfort braking level for the vehicle can be determined based on at least one of the vehicle weight, obstacle height, slope inclination, and user input. The vehicle controller may select braking control parameters 731 corresponding to the determined comfort braking level from a plurality of sets of braking control parameters 714 and stop the vehicle by performing braking control for a set duration (e.g., 2 s) through the vehicle's braking control system. In some examples, corresponding, pre-calibrated braking control parameters are provided for each comfort braking level. Different comfort braking levels have different braking control parameters, but they can ensure vehicle driving safety when pre-calibrated.

In some examples, the comfort braking control of the vehicle may comprise two stages that are executed sequentially, and the braking control parameters may comprise switching conditions between these two stages, which are associated with the comfort braking level. In some examples, the switching condition may be the inflection point of switching the vehicle's braking control stage for the duration of comfort braking control. More specifically, the switching condition may be the inflection point of the vehicle's acceleration change for the duration of comfort braking control.

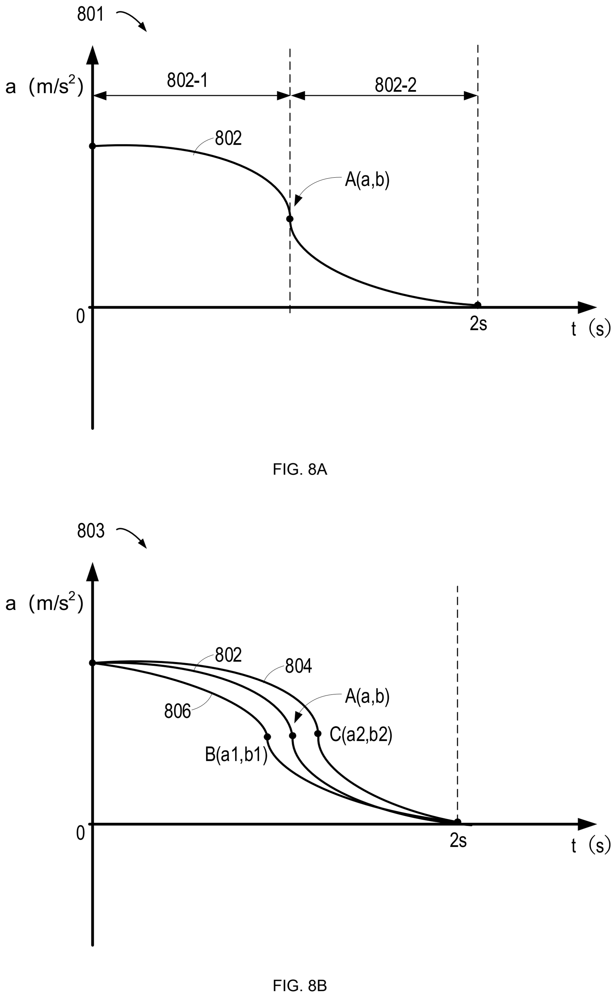

FIG. 8A shows a schematic diagram 801 of the stages of a process for comfort braking according to some examples of the present disclosure. As shown in the schematic diagram 801, the braking curve 802 is the comfort braking control process executed by the vehicle's control system for a specific comfort braking level and shows the change of the vehicle's acceleration over time. As shown in the schematic diagram 801, the comfort braking process may last for 2 s and comprises a first stage 802-1 (i.e., the first braking stage or the braking sensation stage) and a second stage 802-2 (i.e., the second braking stage or the smoothness sensation stage).

In some examples, the brake pedal pressure of the vehicle can be detected, and when the brake pedal pressure is greater than a certain threshold, it is determined that the driver is tending to brake and the control system takes over the braking of the vehicle and activates the comfort braking function; that is, controls the braking of the vehicle according to the curve 802. It will be understood that the threshold associated with the braking tendency here should be less than the brake pedal pressure threshold associated with emergency braking tendency (or emergency situation) mentioned above.

In some examples, the brake pedal pressure of the vehicle may continue to be detected during the process of controlling the comfort braking of the vehicle according to the curve 802, and the comfort braking process is stopped if the brake pedal pressure is detected to be very small (e.g., less than a threshold associated with the braking tendency) or very large (e.g., greater than a threshold associated with the emergency braking tendency). It will be understood that brake pedal pressure below the threshold associated with the braking tendency indicates that the driver does not want to continue braking and the comfort braking process should be disengaged, while brake pedal pressure above the threshold associated with the emergency braking tendency indicates an emergency situation and the comfort braking process should be disengaged. In this way, comfort braking control can be further refined to further improve safety and comfort.

In some examples, in the first stage 802-1 (i.e. the first braking stage), in the initial stage of vehicle braking, the user expects to ensure that the vehicle can come to a stop (i.e., the braking sensation mentioned above). Thus, the vehicle braking acceleration decreases rapidly and its rate of change becomes larger and larger. In the second stage 802-2 (i.e., the second braking stage), in the initial stage of vehicle braking, the user may expect the vehicle to stop smoothly (i.e., the smoothness sensation mentioned above), preventing the cushioning sensation caused by inertia. Thus, the vehicle's braking acceleration decreases slowly and its rate of change becomes larger and larger. In this way, the change in acceleration at the start and end stages of comfort braking control is more gradual. In examples of the present disclosure, the first stage is also referred to as the first braking stage or the braking sensation stage and the second stage is also referred to as the second braking stage or the smoothness sensation stage.

As shown in FIG. 8A, the switching point between the first stage 802-1 and the second stage 802-2 is point A, A(a, b). Point A has an abscissa a (i.e., the time corresponding to the switching point A) and an ordinate b (i.e., the acceleration value corresponding to the switching point B). In some examples, the switching condition corresponds to a transition from an increase in the rate of change of acceleration to a decrease in the rate of change of acceleration. For example, when the switching condition is determined to be met, the braking of the vehicle may be controlled to switch from the first stage 802-1 to the second stage 802-2.

As shown in FIG. 8A, at the switching point A, the rate of change of acceleration is at its maximum value. In some examples, the switching condition may correspond to a preset acceleration change rate. For example, an acceleration change rate threshold can be preset, and when the actual acceleration change rate is detected to reach the preset acceleration change rate threshold, the switching condition is determined to be met, and it switches from the first stage 802-1 to the second stage 802-2. It will be understood that the switching condition is related to the comfort braking level.

In some examples, the switching condition may correspond to a preset duration threshold. For example, a duration threshold may be preset. When the vehicle is detected to be in the first stage 802-1 and the preset duration threshold is reached, it is determined that the switching condition is met and it switches from the first stage 802-1 to the second stage 802-2.

In some examples, the switching condition may consider both the preset duration threshold and the preset acceleration value. For example, when the vehicle is detected to be in the first stage 802-1 and both the preset duration threshold and the preset acceleration value are reached, it is determined that the switching condition is met and it switches from the first stage 802-1 to the second stage 802-2.

In some examples, comfort braking control (e.g., controlling vehicle braking along the trend of curve 802) may be performed on the vehicle based on switching conditions associated with a particular comfort braking level; i.e., the coordinates of the switching point A corresponding to the particular comfort braking level.

It will be understood that the comfort braking time may be different from 2 s and the curves of the first stage 802-1 and the second stage 802-2 may be asymmetrical, e.g., they may have different curvatures, trends, and durations, the first stage 802-1 and the second stage 802-2 may be discontinuous, and comfort braking may comprise any number of stages, which are not limited herein. It will be understood that the braking curve is associated with the comfort braking level. The curve 802 in FIG. 8A is only an example of the braking process for a specific comfort braking level, and FIG. 8B below shows a schematic diagram 803 of the stages of different comfort braking levels according to some examples of the present disclosure.

Referring to FIG. 8B, in schematic diagram 803, comfort braking curves 806, 802, and 804 associated with three different comfort braking levels are shown. The curve 802 is the same as in FIG. 8A above, with a switching point A(a, b). The curve 806 has the same start and end points as the curve 802, but is below the curve 802 and has a switching point B(a1, b1). The curve 804 has the same start and end points as the curve 802, but is above the curve 802 and has a switching point C(a2, b2).

As shown in FIG. 8B, the switching point B(a1, b1) of the curve 806 is to the left of the switching point A(a, b) of the curve 802. The abscissa is smaller, the transition occurs earlier, the duration of the second stage 802-2 is longer, and the smoothness sensation stage is longer; that is, the stage with gentle acceleration change is longer, and the smoothness sensation is thus stronger. In some examples, the curve 806 is suitable for situations where a smoother control of the rate of change of acceleration is desired or a longer safe braking distance is required than the curve 802, such as when the driver is fatigued or angry, when there is an obstacle or the obstacle is higher, when there is a slope or the slope's inclination is greater, or when the vehicle is relatively heavy.

As described in FIG. 8B, the switching point C(a2, b2) of the curve 804 is to the right of the switching point A(a, b) of the curve 802. The abscissa is larger, the transition occurs later, the duration of the first stage 802-1 is longer, and the braking sensation stage is longer; that is, the stage with greater acceleration change is longer, and the braking sensation is thus stronger. In some examples, the curve 806 is suitable for situations where a larger acceleration change rate or a shorter safe braking distance is desired compared to the curve 802. For example, scenarios where the vehicle is relatively light, there are no obstacles or slopes, downhill driving, rainy or snowy weather, or slippery roads that require stronger braking force, or scenarios that demand high vehicle handling, e.g., high-performance driving experience scenarios, where the driver seeks a sense of vehicle control.

It will be understood that different braking curves correspond to different comfort braking levels. For example, the higher the comfort braking level, the further to the left the switching point is in FIG. 8B, and the longer the smoothness sensation stage lasts. In some examples, different braking curves may be determined based on vehicle state data and environmental sensing data, and vehicle braking may be controlled based on the determined braking curves. For example, different braking curves may be determined based on vehicle weight, obstacle height, or slope inclination. In some examples, the heavier the vehicle, the greater the height of the obstacle, or the greater the slope, the further to the left the braking curve switching point is. The methods for determining vehicle weight, obstacle height, and slope inclination have been described above and will not be repeated here. In this way, safe and comfortable braking can be achieved that conforms to actual external environmental conditions.

In some examples, the braking curve may be determined according to user input. For example, based on the braking mode input by the user, a comfort braking level for the vehicle is selected from a plurality of comfort braking levels. In some examples, the different braking modes may correspond to different switching points (or switching conditions). For example, a switching condition for the vehicle is selected from a plurality of switching conditions based on the braking mode input by a user. The comfort braking level for the vehicle is then selected from a plurality of comfort braking levels based on the selected switching condition.

In some examples, the user input may comprise a sport mode, a commuter mode, and an infant/child mode. In infant/child mode, the acceleration change rate is expected to be as small as possible, thus requiring the highest comfort braking level, e.g., maximizing the duration of the smoothness stage and shifting the switching point as far to the left as possible. Therefore, in infant/child mode, comfort braking control can be performed according to the curve 806. In sport mode, higher demands are placed on vehicle handling, thus requiring the lowest comfort braking level. The acceleration change rate can be greater to bring the vehicle to an immediate stop and the switching point should be as far to the right as possible. Therefore, in sport mode, comfort braking control can be performed according to the curve 804. In commuter mode, a moderate comfort braking level is required to balance the braking sensation and smoothness sensation. Thus, comfort braking control can be performed according to the curve 806. In this way, the user's preferences for comfort braking can be obtained, passengers' personalized braking needs can be met, and safety and the user experience can be improved.

In some examples, vehicle state data, environmental sensing data, and user input may be fused in multimodal data, a braking curve corresponding to the comfort braking level may be selected based on at least one of the three, and vehicle braking may be controlled according to the selected braking curve. In this way, it is possible to achieve both the personalized braking needs of the driver/passengers and safe and comfortable braking that conforms to actual external conditions.

The above description of the switching conditions is based on the abscissa (time) of the switching point. This is merely exemplary, and the switching conditions of the braking curve may also be related to acceleration. For example, the switching points A, B, and C in the curves 802-806 may have different ordinates a, a1, and a2, which correspond to different comfort braking levels.

In some examples, different comfort braking levels may have different magnitudes of transition acceleration or rates of change of transition acceleration. For example, a higher comfort braking mode can result in a smaller transition acceleration (ordinate of the switching point) or a smaller acceleration change rate (slope at the switching point) corresponding to the transition acceleration, thus making braking smoother.

In some examples, different comfort braking levels may also have different braking curves, such as braking curves with different numbers of stages, or braking curves with different slopes, curvatures, and trends. It will be understood that the values and curve curvatures in FIGS. 8A and 8B are merely exemplary, and the curves are only used to show the trend of acceleration over time and do not represent its actual value. In fact, during braking, the acceleration is negative.

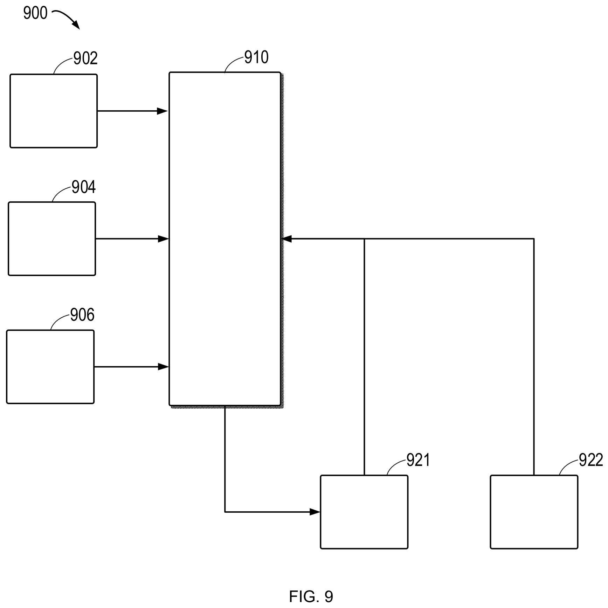

FIG. 9 shows a schematic diagram of an Al training method for a vehicle weight model according to examples of the present disclosure. As shown in FIG. 9, in some examples, the vehicle weight 921 of the vehicle is generated by a vehicle weight model based on the sample wheel speed 902, sample torque 904, and sample slope presence information 906. The sample wheel speed 902, sample torque 904, and sample slope presence information 906 have a corresponding labeled vehicle weight 922. The labeled vehicle weight 922 is the vehicle weight detected under the conditions of the corresponding sample wheel speed, sample acceleration, and sample slope presence information. The vehicle weight model is trained based on the generated vehicle weight 921 and the labeled vehicle weight 922. The convergence condition is that the difference between the generated vehicle weight 921 and the labeled vehicle weight 922 is sufficiently small.

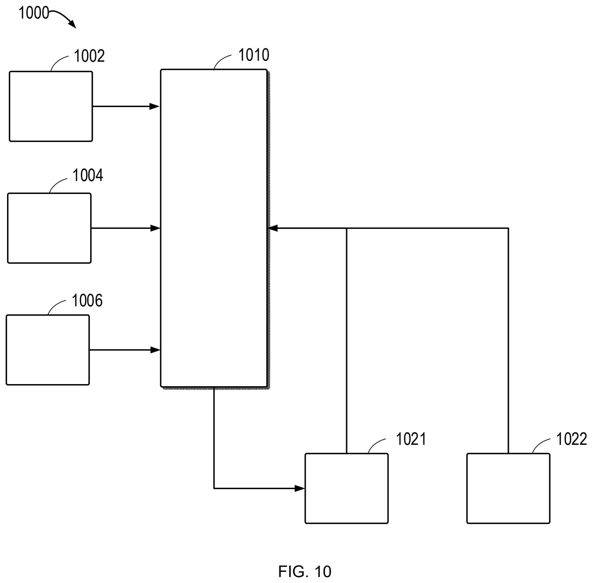

FIG. 10 shows a schematic diagram of an Al training method for an inclination model according to examples of the present disclosure. As shown in FIG. 10, in some examples, the vehicle's inclination 1021 is generated by an inclination model based on the sample slope presence information 1002, sample wheel speed 1004, and ambient air pressure 1006. The sample slope presence information 1002, sample wheel speed 1004, and ambient air pressure 1006 have a corresponding labeled inclination 1022. The labeled inclination 1022 is the inclination detected under the conditions of the corresponding sample slope presence information 1002, sample wheel speed 1004, and ambient air pressure 1006. The inclination model is trained based on the generated inclination 1021 and the labeled inclination 1022. The convergence condition is that the difference between the generated inclination 1021 and the labeled inclination 1022 is sufficiently small.

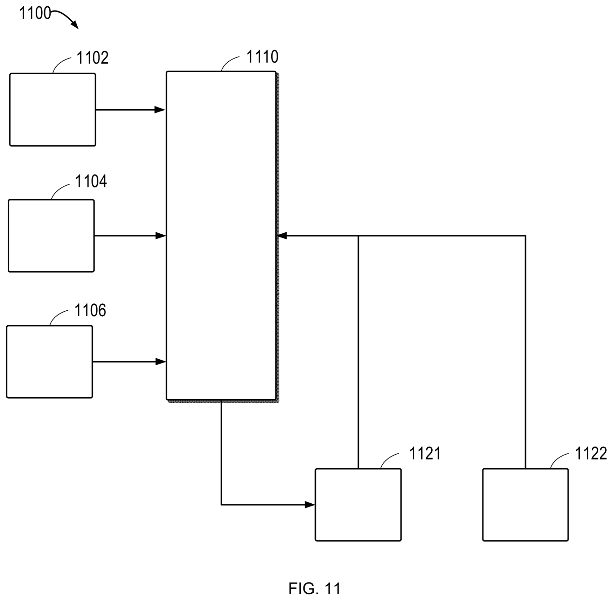

FIG. 11 shows a schematic diagram of an Al training method for an obstacle height model according to examples of the present disclosure. As shown in FIG. 11, in some examples, the obstacle height 1121 of the vehicle is generated by an obstacle height model based on the sample obstacle type 1102, sample wheel speed 1104, and sample requested acceleration 1106. The sample obstacle type 1102, sample wheel speed 1104, and sample requested acceleration 1106 have a corresponding labeled obstacle height 1122. The labeled obstacle height 1122 is the obstacle height detected under the conditions of the corresponding sample obstacle type 1102, sample wheel speed 1104, and sample requested acceleration 1106. The obstacle height model is trained based on the generated obstacle height 1121 and the labeled obstacle height 1122. The convergence condition is that the difference between the generated obstacle height 1121 and the labeled obstacle height 1122 is sufficiently small.

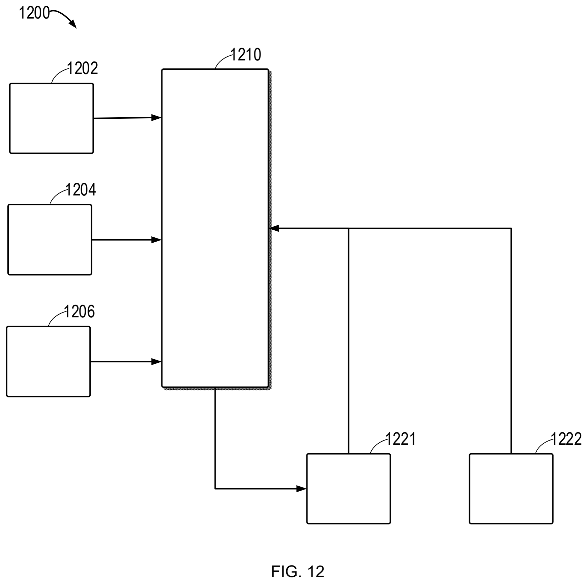

FIG. 12 shows a schematic diagram of an Al training method for a brake disc temperature model according to examples of the present disclosure. As shown in FIG. 12, in some examples, the brake disc temperature 1221 of the vehicle is generated by a brake disc temperature model based on the sample vehicle speed 1202, sample wheel cylinder pressure 1204, and sample brake pedal pressure 1206. The sample vehicle speed 1202, sample wheel cylinder pressure 1204, and sample brake pedal pressure 1206 have a corresponding labeled brake disc temperature 1222. The labeled brake disc temperature marked 1222 is the brake disc temperature detected under the conditions of the corresponding sample vehicle speed 1202, sample wheel cylinder pressure 1204, and sample brake disc temperature 1206. The brake disc temperature model is trained based on the generated brake disc temperature 1221 and the labeled brake disc temperature 1222. The convergence condition is that the difference between the generated brake disc temperature 1121 and the labeled brake disc temperature 1222 is sufficiently small.

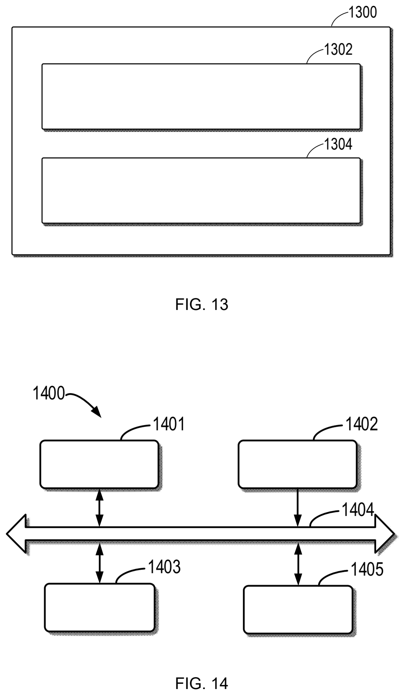

FIG. 13 shows a block diagram of an apparatus 1300 for braking a vehicle according to some examples of the present disclosure. As shown in FIG. 13, the apparatus 1300 further comprises a braking level acquisition unit 1302 configured to acquire a comfort braking level for the vehicle determined based on multimodal data related to the vehicle. This multimodal data comprises vehicle state data and environmental sensing data. Further, the apparatus 1300 further comprises a brake control unit 1304 configured to control the braking of the vehicle according to the comfort braking level.

In some examples, the apparatus 1300 further comprises a multimodal data acquisition unit and a multimodal determination unit, wherein the multimodal data acquisition unit is configured to acquire multimodal data and the multimodal determination unit is configured to determine a comfort braking level for the vehicle based on the multimodal data.

In some examples, the vehicle state data comprises the vehicle's wheel speed and torque and the environmental sensing data comprises slope presence information. The braking level acquisition unit 1302 comprises a vehicle weight determination module, which is configured to determine the vehicle weight based on wheel speed, torque, and slope presence information. For example, the vehicle weight determination module is configured to determine the vehicle weight based on the vehicle's wheel speed and torque in response to slope presence information indicating that there is no slope in the external environment. In addition, the braking level acquisition unit 1302 further comprises a comfort braking level determination module, which is configured to select a comfort braking level for the vehicle from a plurality of comfort braking levels based on vehicle weight.

In some examples, the vehicle state data comprises the vehicle's wheel speed and the environmental sensing data comprises slope presence information and ambient air pressure. The braking level acquisition unit 1302 further comprises an inclination determination unit, configured to, in response to slope presence information indicating the presence of a slope in the external environment, determine the distance traveled by the vehicle during the climbing period based on the vehicle's wheel speed; determine the change in height of the vehicle during the climbing period based on ambient air pressure; and determine the inclination of the slope based on the travel distance and the change in height. In addition, the braking level acquisition unit 1302 further comprises a comfort braking level determination module, which is configured to select a comfort braking level for the vehicle from a plurality of comfort braking levels based on inclination and vehicle weight.

In some examples, the vehicle state data comprises the vehicle's wheel speed and requested acceleration and the environmental sensing data comprises obstacle type. The braking level acquisition unit 1302 further comprises an obstacle height determination unit, configured to, in response to an obstacle type indication that the obstacle is a speed bump, determine the actual acceleration and travel distance of the vehicle during the time period of running over the obstacle based on the vehicle's wheel speed; and determine the height of the obstacle based on the vehicle's actual acceleration, requested acceleration, and travel distance. In addition, the braking level acquisition unit 1302 further comprises a comfort braking level determination module, which is configured to select a comfort braking level for the vehicle from a plurality of comfort braking levels based on obstacle height, inclination, and vehicle weight.

In some examples, the comfort braking level determination module is configured to select a comfort braking level for the vehicle from a plurality of comfort braking levels based on obstacle height, inclination, vehicle weight, and user data.

In some examples, the vehicle state data further comprises the vehicle speed and brake pedal pressure and the environmental sensing data comprises the ambient temperature. The comfort braking level acquisition unit 1302 further comprises a brake disc temperature determination module, which is configured to determine the wheel cylinder pressure of the vehicle based on the brake pedal pressure; and to determine the brake disc temperature of the vehicle based on the ambient temperature, the wheel cylinder pressure of the vehicle, and the vehicle speed. The comfort braking level acquisition unit 1302 further comprises a comfort braking activation judgment module, which is configured to determine whether to activate the comfort braking function based on the brake disc temperature. Further, the comfort braking level acquisition unit 1302 is further configured to determine the comfort braking level for the vehicle based on multimodal data in response to determining that the comfort braking function is to be activated.

In some examples, the comfort braking activation judgment module is configured to determine to activate the comfort braking function in response to the brake disc temperature being lower than or equal to a temperature threshold; and to determine not to activate the comfort braking function in response to the brake disc temperature being higher than the temperature threshold.

In some examples, the comfort braking level acquisition unit 1302 further comprises an emergency determination unit configured to determine an emergency of the vehicle based on at least one of vehicle state data and environmental sensing data. The comfort braking level acquisition unit 1302 further comprises a second comfort braking activation judgment module, which is configured to determine whether to activate the comfort braking function based on the determination of an emergency of the vehicle. Further, the comfort braking level acquisition unit 1302 is further configured to determine the comfort braking level for the vehicle based on multimodal data in response to determining that comfort braking is to be activated.

In some examples, the vehicle state data comprises the activation state of the vehicle's safety systems or the pressure of the brake pedal and the environmental sensing data comprises at least one of time to collision, distance between the vehicle and the vehicle in front, or target object. 1304 The emergency judgment unit is configured to determine whether the vehicle is in an emergency based on at least one of the activation of the vehicle's safety system, brake pedal pressure, time to collision, distance to the vehicle in front, or target object; and to determine that the vehicle is in an emergency in response to at least one of the activation of the vehicle's safety system, brake pedal pressure exceeding a pressure threshold, time to collision less than a time threshold, distance to the vehicle in front less than a distance threshold, or the presence of a target object.

In some examples, the brake control unit 1304 is further configured to perform comfort braking control on the vehicle based on switching conditions associated with a comfort braking level, wherein the comfort braking control comprises a first braking stage and a second braking stage and the switching conditions indicate a switch from the first braking stage to the second braking stage.

In some examples, the multimodal data further comprises user data, the user data comprising the braking mode input by the user. The comfort braking level acquisition unit 1302 is configured to select a comfort braking level for the vehicle from a plurality of comfort braking levels based on the braking mode.

In some examples, the comfort braking level acquisition unit 1302 is further configured to perform comfort braking control on the vehicle based on a braking mode associated with a comfort braking level, wherein the comfort braking control comprises a first braking stage and a second braking stage and the switching conditions indicate a switch from the first braking stage and the second braking stage. In addition, the comfort braking level acquisition unit 1302 is further configured to select a switching condition for the vehicle from a plurality of switching conditions based on the braking mode; and to select a comfort braking level for the vehicle based on the determined switching condition.

FIG. 14 shows a block diagram of a controller 1400 that may implement a plurality of examples of the present disclosure. The controller 1400, e.g., may be the controller 120 as shown in FIG. 1. As shown in the figure, the electronic device 1400 comprises a processor 1401, which can perform various appropriate actions and processes according to computer program instructions stored in a read only memory (ROM) 1402 and loaded into a random access memory (RAM) 1403. Various programs and data required for the operation of the electronic device 1400 may also be stored in the RAM 1403. The processor 1401, the ROM 1402, and the RAM 1403 are interconnected through a bus 1404. An input/output (I/O) interface 1405 is also connected to the bus 1404.

The processor 1401 can be various general-purpose and/or special-purpose processing components with processing and computing capabilities. Examples of the processor 1401 comprise, but are not limited to, central processing units (CPU), graphics processing units (GPU), various dedicated AI computing chips, various computing units running machine learning model algorithms, digital signal processors (DSP), and any appropriate processors, controllers, microcontrollers, etc. The processor 1401 performs various methods and processes described above, such as the method 200. For example, in some examples, the method 200 can be implemented as a computer software program tangibly contained in a machine-readable medium. In some examples, portions or all of the computer program can be loaded and/or installed onto electronic device 1400 via ROM 1402. When the computer program is loaded into the RAM 1403 and executed by the processor 1401, one or more steps of the method 200 described above can be performed. Alternatively, in other examples, the processor 1401 can be configured to perform method 200 by any other suitable means (e.g., by means of firmware).

In some examples, the controller 1400 may be a vehicle control unit, a domain control unit, a processing unit of the vehicle system, and the like.

The functions described above herein can be performed, at least in part, by one or more hardware logic components. For example, and without limitation, exemplary types of hardware logic components that can be used comprise: Field Programmable Gate Arrays (FPGA), Application Specific Integrated Circuits (ASIC), Application Specific Standard Products (ASSP), System on a Chip (SOC), Complex Programmable Logic Devices (CPLD), and the like.

The program code for implementing the methods of the present disclosure can be written in any combination of one or more programming languages. This program code can be provided to a processor or controller of a general-purpose computer, special-purpose computer, or other programmable data processing devices such that the program code, when executed by the processor or controller, causes the functions/operations specified in the flowcharts and/or block diagrams to be implemented. The program code can be executed entirely on the machine, partly on the machine, as a stand-alone software package partly on the machine and partly on a remote machine, or entirely on a remote machine or server.

In the context of the present disclosure, a machine-readable medium can be a tangible medium that can contain or store programs for use by or in conjunction with an instruction execution system, apparatus, or device. A machine-readable medium can be a machine-readable signal medium or a machine-readable storage medium. The machine-readable medium can comprise, but is not limited to, electronic, magnetic, optical, electromagnetic, infrared, or semiconductor systems, apparatuses, or devices, or any suitable combination of the foregoing. More specific examples of the machine-readable storage medium would comprise electrical connections based on one or more wires, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing. Furthermore, although operations have been depicted in a specific order, it should be understood that such operations are not required to be performed in the specific order shown or in sequential order, nor are all illustrated operations required to be performed to achieve the desired results. In certain contexts, multitasking and parallel processing may be advantageous. Similarly, although several specific implementation details are included in the above discussion, these should not be construed as limiting the scope of the present disclosure. Certain features described in the context of separate examples can also be implemented in combination in a single implementation. Conversely, various features described in the context of a single implementation can also be implemented separately or in any suitable sub-combination in a plurality of implementations.

Although the subject matter has been described in language specific to structural features and/or methodological acts, it is to be understood that the subject matter defined in the appended Claims is not necessarily limited to the specific features or acts described above. Rather, the specific features and operations described above are merely exemplary forms of implementing the Claims.

## Claims

1. A method (200) for controlling vehicle braking, comprising:
acquiring (204) a comfort braking level for the vehicle determined based on multimodal data related to the vehicle, the multimodal data comprising vehicle state data and environmental sensing data; and
controlling (206) the braking of the vehicle according to the comfort braking level.

2. The method (200) according to Claim 1, further comprising:
acquiring (202) the multimodal data; and
based on the multimodal data, determining (203) the comfort braking level for the vehicle.

3. The method (200) according to Claim 2, wherein the vehicle state data comprises the vehicle's wheel speed and torque and the environmental sensing data comprises slope presence information; and based on the multimodal data, determining (203) the comfort braking level for the vehicle comprises:
in response to the slope presence information indicating that there is no slope in the external environment, determining the vehicle weight based on the wheel speed and the torque of the vehicle; and
selecting the comfort braking level for the vehicle from a plurality of comfort braking levels based on the vehicle weight.

4. The method (200) according to Claim 2, wherein the vehicle state data comprises the vehicle's wheel speed and the environmental sensing data comprises slope presence information and ambient air pressure; and based on the multimodal data, determining (203) the comfort braking level for the vehicle comprises:
in response to the slope presence information indicating the presence of a slope in the external environment, determining the distance traveled by the vehicle during the climbing period based on the vehicle's wheel speed;
determining the height change of the vehicle during the climbing period based on the ambient air pressure;
determining the slope's inclination based on the travel distance and the height change; and
selecting the comfort braking level for the vehicle from a plurality of comfort braking levels based on the inclination of the slope and the vehicle weight.

5. The method (200) according to Claim 4, wherein the vehicle state data further comprises the vehicle's requested acceleration and the environmental sensing data comprises obstacle type; and selecting the comfort braking level for the vehicle from the plurality of comfort braking levels comprises:
in response to the obstacle type indicating that the obstacle is a speed bump, determining the actual acceleration and travel distance of the vehicle during the period of running over the obstacle based on the wheel speed of the vehicle;
determining the height of the obstacle based on the vehicle's actual acceleration, the requested acceleration, and the travel distance; and
selecting the comfort braking level for the vehicle from the plurality of comfort braking levels based on the height of the obstacle, the inclination, and the vehicle weight.

6. The method (200) according to Claim 2, wherein the vehicle state data comprises the vehicle speed and brake pedal pressure and the environmental sensing data comprises ambient temperature; and based on the multimodal data, determining (203) the comfort braking level for the vehicle comprises:
determining the wheel cylinder pressure of the vehicle based on the brake pedal pressure;
determining the brake disc temperature of the vehicle based on the ambient temperature, the wheel cylinder pressure of the vehicle, and the vehicle speed;
determining whether to activate the comfort braking function based on the brake disc temperature; and
in response to determining to activate the comfort braking function, determining the comfort braking level for the vehicle based on the multimodal data.

7. The method (200) according to Claim 6, wherein determining whether to activate the comfort braking function based on the brake disc temperature comprises:
in response to the brake disc temperature being lower than or equal to a temperature threshold, determining to activate the comfort braking function; and
in response to the brake disc temperature being higher than a temperature threshold, determining not to activate the comfort braking function.

8. The method (200) according to Claim 2, further comprising:
determining an emergency of the vehicle based on at least one of the vehicle state data and the environmental sensing data;
determining whether to activate the comfort braking function based on the determination of the emergency of the vehicle; and
in response to determining to activate the comfort braking function, determining the comfort braking level for the vehicle based on the multimodal data.

9. The method (200) according to Claim 8, wherein the vehicle state data comprises the activation state of the vehicle's safety systems or the pressure of the brake pedal and the environmental sensing data comprises at least one of time to collision, distance between the vehicle and the vehicle in front, or target object, and wherein performing the determination of the emergency of the vehicle comprises:
determining whether the vehicle is in the emergency based on at least one of the activation state of the vehicle's safety systems, the vehicle's brake pedal pressure, the time to collision, the distance between the vehicle and the vehicle in front, or the target object; and
determining that the vehicle is in the emergency in response to at least one of the vehicle's safety systems being activated, the brake pedal pressure being greater than a pressure threshold, the time to collision being less than a time threshold, the distance between the vehicle and the vehicle in front being less than a distance threshold, or the presence of the target object.

10. The method (200) according to Claim 1, wherein controlling the braking of the vehicle according to the comfort braking level comprises:
performing comfort braking control on the vehicle based on switching conditions associated with the comfort braking level, wherein the comfort braking control comprises a first braking stage and a second braking stage and the switching conditions indicate a switch from the first braking stage to the second braking stage.

11. The method according to Claim 1, wherein the multimodal data further comprises user data, the user data comprising the braking mode input by a user; and based on the multimodal data, determining (203) the comfort braking level for the vehicle comprises:
selecting the comfort braking level for the vehicle from a plurality of comfort braking levels based on the braking mode.

12. The method (200) according to Claim 11, wherein controlling the braking of the vehicle according to the comfort braking level comprises:
performing comfort braking control on the vehicle based on switching conditions associated with the braking mode, wherein the comfort braking control comprises a first braking stage and a second braking stage and the switching conditions indicate a switch from the first braking stage to the second braking stage; and
wherein selecting the comfort braking level for the vehicle from the plurality of comfort braking levels based on the braking mode comprises:
selecting a switching condition for the vehicle from a plurality of switching conditions based on the braking mode; and
selecting the comfort braking level for the vehicle from the plurality of comfort braking levels based on the selected switching condition.

13. An apparatus (1300) for controlling vehicle braking, comprising:
a braking level acquisition unit (1302) configured to acquire a comfort braking level for the vehicle determined based on multimodal data related to the vehicle, the multimodal data comprising vehicle state data and environmental sensing data; and
a brake control unit (1304) configured to control the braking of the vehicle according to the comfort braking level.

14. A controller (1400), comprising:
at least one processor (1401); and
a memory, coupled to the at least one processor, and having instructions stored thereon that, when executed by the at least one processor, cause the controller to perform the method according to any one of Claims 1 to 12.

15. A computer program product, comprising a computer program, wherein the computer program is executed by a processor to implement the method according to any one of Claims 1 to 12.
